# EUROPÄISCHE PATENTSCHRIFT

(11) **EP 2 030 308 B1**
(45) Veröffentlichungstag und Bekanntmachung des Hinweises auf die Patenterteilung: **02.05.2012**
(21) Anmeldenummer: 07718509.8
(22) Anmeldetag: 20.06.2007
(51) Int. Cl.: H02K 9/18, H02K 1/32

(54) **Verfahren zur Kühlung eines Rohrturbinengenerators und Rohturbinengenerator**
Method for cooling a submerged hydraulic turbine-generator and submerged hydraulic turbine-generator
Procédé de refroidissement d'une turbine générateur bulbe hydraulique et turbine générateur bulbe hydraulique

(30) Priorität: 22.06.2006 AT 10612006
(43) Veröffentlichungstag der Anmeldung: 04.03.2009
(73) Patentinhaber: Andritz Hydro GmbH, 1141 Wien (AT)
(72) Erfinder: HARB, Walter, 8160 Weiz (AT); ERHARD, Johannes, 8020 Graz (AT); FARNLEITNER, Ernst, 8160 Weiz (AT)
(74) Vertreter: Schweinzer, Friedrich
(86) Internationale Anmeldenummer: PCT/AT2007/000300
(87) Internationale Veröffentlichungsnummer: WO 2007/147187

(56) Entgegenhaltungen:
- FR-A- 1 022 783
- JP-A- 4 133 641
- JP-A- 4 340 347
- JP-A- 7 087 709
- JP-A- 55 046 849
- JP-A- 58 107 042
- JP-A- 58 123 348
- SU-A1- 855 871

## Beschreibung

Die gegenständliche Erfindung betrifft ein Verfahren zur Kühlung eines Stators und eines Rotors eines Rohrturbinengenerators bei dem ein gasförmiges Kühlmedium mittels eines fremdgetriebenen Ventilators im Ventilations-Kreis umgewälzt wird. Die Erfindung betrifft auch einen entsprechenden Rohrturbinengenerator.

Bei luftgekühlten Generatoren unterscheidet man grundsätzlich zwischen so genannten Forwardflow- und Reverseflow-Kühlsystemen, also im Prinzip zwischen der Richtung in der die Kühlluft durch den Generator geführt wird. Bei Forwardflow wird mittels Ventilatoren kalte Kühlluft aus Wärmetauschern angesaugt und durch den Rotor bzw. den Luftspalt und anschließend durch den Stator gedrückt, wo heiße Kühlluft austritt und über den Wärmetauscher wieder umgewälzt wird. Bei Reverseflow wird heiße Kühlluft aus dem Generator angesaugt und einem Wärmetauscher zugeführt, von wo die kalte Kühlluft durch den Stator zum Rotor bzw. zum Luftspalt strömt.

Bekannt sind Reverseflow-Kühlsysteme für Turbogeneratoren, siehe z.B. US 5 633 543 A, US 5 652 469 A, US 6 346 753 B1 und EP 1 006 644 A2. Die JP 58 123 348 offenbart eine Vorrichtung und ein Verfahren zur Kühlung einer elektrischen Maschine mit fremdgetriebenen Ventilatoren. Hierbei befindet sich jedoch die Kühleinrichtung direkt auf dem Stator, wodurch sich gewisse Statorteile im Warmluftbereich befinden. Dies kann sich negativ auf die Luftspaltweite zwischen Stator und Rotor auswirken, da insbesondere die Randbereiche des Stators schlecht gekühlt werden.

Die FR 1022783 offenbart einen Rohrturbinengenerator, bei dem die durch den Stator und den Rotor erwärmte Kühlluft über einen Ventilator angesaugt und über einen Kanal entlang des Gehäusemantels erneut dem Stator und Rotor zugeführt wird. Die Kühlluft wird dabei durch den Gehäusemantel gekühlt.

Hauptmerkmal des Reverseflow-Kühlsystems ist, wie oben beschrieben, eine Saugkühlung des Generators, bei der Warmluft aus dem Generator mittels eines Ventilators gesaugt und die Kaltluft aus den Kühlern direkt den Kühlkanälen des Generatorstators zugeführt wird. Die Kühler sind in den meisten Fällen auf der Druckseite der Ventilatoren angeordnet, wobei sich der Vorteil ergibt, dass die von den Ventilatoren erzeugte Temperaturerhöhung vor dem Kühlereinlass erfolgt und nicht als Voraufheizung für den Generator wirkt. Die Strömung im Stator ist dabei primär von radial außen nach innen gerichtet und wird, da Turbogeneratoren in der Regel Vollpolrotoren aufweisen, im Allgemeinen axial entlang des Luftspalts abgesaugt. Aufgrund der schnell laufenden Rotoren bei Turbogeneratoren wird ein Eigenventilator zur Erzeugung der für die Kühlung erforderlichen Strömung direkt auf der Rotorwelle angeordnet und von dieser angetrieben.

Bei langsam laufenden Hydro-Generatoren, die im Allgemeinen mit Schenkelpolen ausgeführt sind, wie z.B. ein Rohrturbinengenerator, kommen in erster Linie nur fremdgetriebene Ventilatoren, also Ventilatoren die nicht auf der Rotorwelle angeordnet sind, in Frage, da die Rotationsgeschwindigkeit der Rotorwelle nicht ausreichen würde, um mit einem darauf angebrachten Ventilator die erforderliche Kühlluftströmung zu erzeugen. Hydro-Generatoren mit beiden Drehrichtungen (z.B. ein Motor-Generator) können ein zweiter Anwendungsfall für Fremdventilation sein.

Hydro-Generatoren wurden bisher ausschließlich mit einem Forwardflow-Kühlsystem betrieben, wie z.B. In der JP 06 237 554 A2 gezeigt, bei dem die Kühler auf der Saugseite und der Generator auf der Druckseite der Ventilatoren angeordnet sind und die Strömung im Stator primär von radial innen nach außen gerichtet ist- Bei Anwendung von Eigenventilatoren hat ein Forwardflow-Kühlsystem Vorteile bezüglich der An- und Abströmung der Ventilatoren. Die Anströmung erfolgt meist nahezu drallfrel, was die Ventilatorauslegung vereinfacht. Die drallbehaftete Abströmung bewirkt einen Vordrall für den Rotor und damit eine Reduktion des Druckverlustes beim Rotoreinlass (z.B. Pollückeneinlass).

Bei Anwendung von Fremdventilatoren anstatt Eigenventilatoren entfallen diese Vorteile größtenteils. Und es treten im Zusammenhang mit Reverseflow zusätzliche Nachteile auf: Bei Hydro-Generatoren, insbesondere bei Schenkelpolgeneratoren, ist mit einem größeren Druckverlust beim Pollückeneinlass zu rechnen, der radial außen im Luftspaltbereich erfolgt, statt radial mittig an den axialen Endseiten wie bei Forwardflow. Auf Grund der zu erwartenden höheren Druckverluste, wird ein Ventilator mit höherer Leistung benötigt, was wiederum den Gesamtwirkungsgrad des Generators reduziert Darüber hinaus kann in Abhängigkeit von der Anordnung der Ventilatoren ein Vordrall beim Ventilatoreinlass bestehen bleiben oder die Ventilatoranströmung komplizierter sein als für Forwardflow. Die komplexere Strömung am Ventilatoreinlass macht dabei unter Umständen Leiteinrichtungen oder Gleichrichter erforderlich, was die Auslegung des Kühlsystems aufwendiger macht. Aus diesem Grund wurden bisher Hydro-Generatoren nicht mit einem Reverseflow-Kühlsystem betrieben, sondern ausschließlich mit Forwardflow.

Die gegenständliche Erfindung, die eine bisher nicht in Erwägung gezogene Reverseflow-Kühlung mit Fremdventilatoren gemäß den unabhängigen Ansprüchen verwirklicht, widerlegt diese vorherrschenden Vorurteile und liefert das überraschende Ergebnis, dass bei Anwendung von Fremdventilatoren die erwarteten Nachteile einer Reverseflow-Kühlung nicht so gravierend sind wie gewöhnlich befürchtet oder durch die erst daraus entstehenden Vorteile mehr als aufgewogen werden.

Insbesondere ergibt sich durch die Anwendung der Reverseflow-Kühlung die Möglichkeit einer größeren Ausnutzung des Stators durch kleinere Kühllufttemperatur in den Statorschlitzen, etwa bis zu 20 K, obwohl der Wärmeübergang im Zahnbereich der Statorschlitze kleiner ist. Das bedeutet, dass bei gleicher Leistung eine Einsparung von kostenintensivem Kupfermaterial der Statorstäbe unter Einhaltung des erlaubten Temperaturniveaus möglich wird. Allerdings kann dabei in Einzelfällen, insbesondere bei Schenkelpolmaschinen, wegen der höheren Lufttemperatur im Polbereich des Rotors, ein größerer Kupferquerschnitt der Polwicklung erforderlich sein, wobei aber das Polkupfermaterial für den Rotor kostengünstiger ist als für die Statorwicklung. In Summe ergibt sich also dadurch ein erster Vorteil der Reverseflow-Kühlung. Weiters kann durch die niedrigere Lufttemperatur im Stator bei gleicher Leistung Statoreisen eingespart werden, was wiederum die Kosten der elektrischen Maschine verringert. Wenn man die Ausnutzung der elektrischen Maschine nicht steigert, ergeben sich niedrigere Statortemperaturen und damit kleinere tangentiale Druckspannungen im Blechpaket bzw. eine geringere Beulgefahr des Stators. Ein weiterer vorteilhafter Effekt bei Reverseflow ist, dass die Differenz der Luftspaltweite bzw. die Differenz der Erregerverluste zwischen kaltem und warmem Zustand kleiner ist, da sich bei Forwardflow-Kühlung der Rotor schwächer erwärmt als der Stator und damit die Temperaturdifferenz zwischen Rotor und Stator größer ist.

Bei Schenkelpolmaschinen sind die Druckverluste beim Pollückeneinlass (radial außen) für Reverseflow größer als für bekannte Forwardflow-Kühlsystemen (Pollückeneinlass radial mittig). Trotzdem wird dieser größere Nachteil durch die oben genannten Vorteil ebenfalls aufgehoben, womit eine Reverseflow-Kühlung mit Fremdventilatoren auch bei Schenkelpolmaschinen einsetzbar ist.

Zur Kühlung der Wickelköpfe gibt es bei einem Reverseflow-Kühlsystem vorteilhaft mehrere Möglichkeiten: (1) Nutzung der axiale aus dem Luftspalt und gegebenenfalls den Pollücken strömenden warmen Luft, die als Sekundärströmung aufgrund der Rotation teilweise in den radial außen liegenden Wickelkopfbereich eintritt. (2) Ein Teil der aus der Kühleinrichtung austretenden Kaltluft kann über Bypässe direkt zu den Wickelköpfen der Statorwicklung geführt werden, wodurch eine verbesserte Kühlung erzielt werden kann. (3) Serielle Ventilation des Wickelkopfs mittels geeigneten Luftführungen, bei der die aus dem Luftspalt und gegebenenfalls den Pollücken strömende Kühlluft über die Wickelköpfe geführt wird, was auch zur Drallreduktion und damit für eine Verbesserung der Ventilatoranströmung dient.

Eine verbesserte Kühlung des Rotors oder eine Reduktion des Druckverlustes kann durch radiale Kanäle im Rotor, durch die Kühlmedium strömen kann, erreicht werden. Erfindungsgemäß wird bei den Rohrturbinengeneratoren das aus der Kühleinrichtung austretende Kühlmedium zwischen Stator und Gehäuse zu den Statorschlitzen geführt, da dann das Kühlmedium durch das außen am Gehäuse des Generators vorbeiströmende kalte Triebwasser das Kühlmedium weiter abkühlt, womit unter Umständen die Kühleinrichtung geringer dimensioniert werden kann.

Wenn die Fremdventilatoren auf beiden Seiten des Generators angeordnet werden können, wird eine Reverseflow-Kühlung mit zwei Kühlkreisen ermöglicht, die je eine axiale Hälfte des Generators abdecken. In diesem Fall besteht meist eine einfache Möglichkeit die Strömung über den Wickelkopf zu leiten und so eine doppelte Wirkung zu erzielen: Kühlung des Wickelkopfs und Strömungsgleichrichtung.

Die Erfindung wird nachfolgend anhand der beispielhaften, schematischen und nicht einschränkenden Figuren 1 bis 5 beschrieben. Dabei zeigt
Fig. 1 einen Ausschnitt eines Rohrturbinengenerators mit erfindungsgemäßer Reverseflow Kühlung.
Fig. 2 einen Ausschnitt eines Querschnitts durch Stator und Rotor mit Schenkelpolwicklung eines Generators.
Fig. 3 bis Fig. 5 verschiedene Varianten einer Reverseflow Kühlung

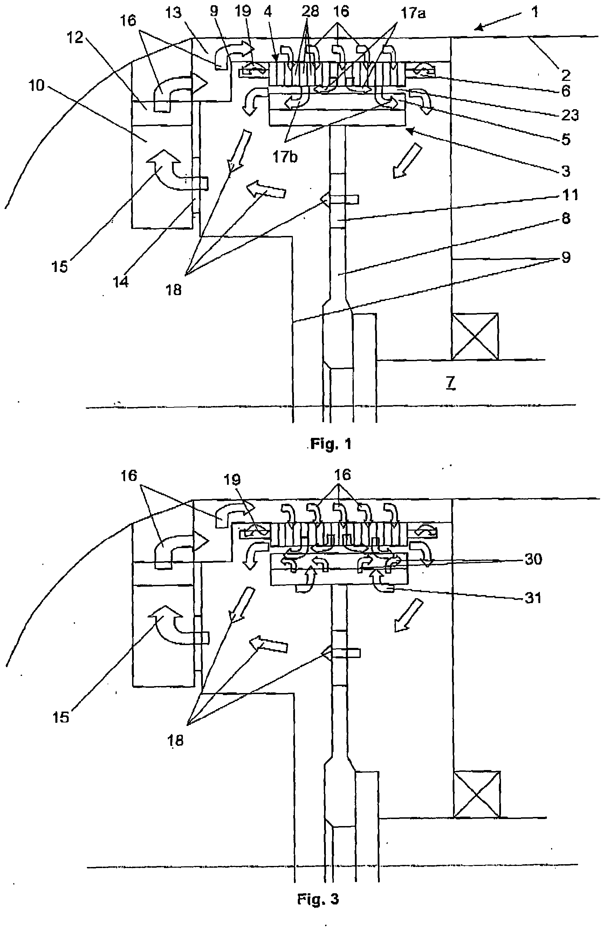

Die vorliegende Erfindung wird im Nachfolgenden anhand von Schenkelpolgeneratoren beschrieben. Fig. 1 zeigt einen Teil eines hinlänglich bekannten Gehäuses 2 einer Rohrturbine, in dem ein Generator 1 angeordnet ist. Dazu ist an einem Ende einer drehbar gelagerten Welle 7 ein Rotor 3 drehfest befestigt und dreht sich folglich mit der Welle 7 mit. Am anderen Ende der Welle 7 und außerhalb des Gehäuses 2 ist eine hier nicht dargestellt, hinlänglich bekannte Turbine, wie z.B. eine Kaplan-Turbine, angeordnet, die die Welle 7 und damit auch den Generator 1 antreibt.

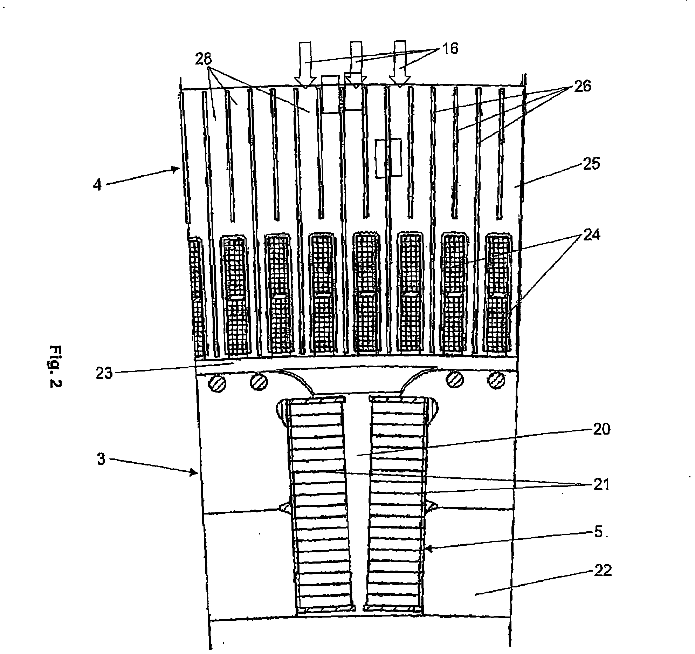

Der Rotor 3 umfasst einen Nabenstern 8, der mit der Welle 7 drehfest verbunden ist und auf dem in bekannter Weise die Rotorwicklung 5 angeordnet ist. Ein Generator 1 einer Rohrturbine ist typischer Weise eine langsam laufende Maschine und weist einen Rotor 3 mit einer Schenkelpolwicklung auf, näheres dazu weiter unten zu Fig. 2.

Der Stator 4 ist hier im Gehäuse 2 ortsfest an einer Tragkonstruktion 9 beabstandet vom Gehäuse 2 und koaxial um den Rotor 3 herum angeordnet und trägt Statorwicklungen mit axial herausragenden Wickelköpfen 6.

Rotor 3 und Stator 4 sind dabei herkömmlich und hinlänglich bekannt aufgebaut und angeordnet, weshalb hier nicht näher darauf eingegangen wird.

Solche Generatoren 1 müssen aufgrund der elektrischen Verluste entsprechend gekühlt werden, z.B. durch eine Luftkühlung wie in Fig. 1 gezeigt. Dabei wird Kühlluft mittels eines Ventilators 10 im Gehäuse 2 im Kreis umgewälzt, so dass die Kühlluft über alle aktiven Generatorteile, also Stator 3, Rotor 4, Wickelköpfe, geführt wird und dort erwärmt wird, wodurch diese Teile gleichzeitig gekühlt werden. Die erwärmte Kühlluft wird dann in einer Kühleinrichtung 12, wie z.B. ein Wärmetauscher, wieder abgekühlt.

Die dargestellte erfindungsgemäße Vorrichtung zur Kühlung des Generators 1 besteht aus einem Ventilator 10, der fremdgetrieben ist, also nicht an der Welle 7 angeordnet und direkt von dieser angetrieben ist. Der Ventilator 10 kann z.B. über einen separaten, nicht eigens dargestellten Elektromotor angetrieben werden. Der Ventilator 10 saugt nun über einen Ansaugkanal 14 aus dem Generatorbereich warme Kühlluft 15 an, wobei der Ventilator 10 z.B. ein Radial- oder Axialventilator sein kann. Die warme Kühlluft 15 wird vom Ventilator 10 mit hohem Druck zu einer Kühleinrichtung 12 gefördert, abgekühlt und tritt als kalte Kühlluft 16 aus der Kühleinrichtung 12 aus. Diese kalte Kühlluft 16 wird über einen Zuführkanal 13 zum Stator 4 geführt, in diesem Beispiel zwischen Gehäuse 2 und Stator 4 mittels geeigneter Konstruktionselemente 9. Die kalte Kühlluft 16 wird nun durch die, hier nur angedeuteten, Statorschlitze 28 (siehe auch Fig. 2) des Stators 4 gedrückt, wird also von einer im Wesentlichen axiale in eine im Wesentlichen radial nach innen gerichtete Strömung umgelenkt. Es ist aber natürlich auch denkbar, dass die kalte Kühlluft 16 durch axiale Kanäle im Stator 4 zu den Statorschlitzen 28 geführt wird, z.B. wenn der Stator direkt an der Innenwand des Gehäuses 2 angeordnet wäre.

Die aus den Statorschlitzen 28 austretende erwärmte Kühlluft 17 wird nun wieder in axiale Richtung umgelenkt und strömt beidseitig in axialer Richtung durch den Luftspalt 23 nach außen, wo dieser Teil der Kühlluft 17a weiter erwärmt wird. Bei einem Rotor mit Schenkelpolwicklung wird die aus dem Stator austretende Kühlluft 17 auch radial in die Pollücken 20 des Rotors 3 gedrückt, wo dieser Teil der Kühlluft 17b wieder in axiale Richtung umgelenkt wird, weiter erwärmt wird und ebenfalls beidseitig axial nach außen geführt wird. Am axialen Ende des Luftspalts 23 bzw. des Rotors 3 strömt die nun weiter erwärmte Kühlluft 18 aus. Ein Teil dieser Kühlluft 19 wird auch über die Wickelköpfe 6 der Statorwicklungen 24 geführt, z.B. durch entsprechende Umlenkbleche. Die vereinigte warme Kühlluft 15 wird wieder vom Ventilator 10 angesaugt, womit der Kühlluftkreis geschlossen ist. Dabei wird die warme Kühlluft 18 der zweiten Generatorhälfte durch entsprechende Öffnungen 11 im Nabestern 8 durchgeführt.

Die Strömung durch den Stator 4 und Rotor 3 mit einer Schenkelpolwicklung wird anhand der Fig. 2 verdeutlicht. Die kalte Kühlluft 16 tritt radial in die Statorschlitze 28 des Stators 4 ein. Die Statorschlitze 28 werden wie hinlänglich bekannt durch Distanzstege 26 im geschichteten Statoreisen 25 gebildet. Die Kühlluft 16 strömt (wie durch die Pfeile in Fig. 2 angedeutet) radial nach innen zu den Statorwicklungsstäben 24, die in herkömmlicher Weise in Nuten angeordnet sind. Die nunmehr erwärmte Kühlluft 17 tritt radial aus dem Stator 4 aus und erfährt nun durch den rotierenden Rotor 3 einen Drall. Diese erwärmte Kühlluft 17 wird wie oben beschrieben einerseits durch den Luftspalt 23 axial nach außen geführt. Andererseits dringt die Kühlluft 17 in die Pollücken 20, die in bekannter Weise zwischen den im Rotoreisen 22 angeordneten Rotorwicklungen 21 eines Rotors mit Schenkelpolwicklung entstehen, ein und wird durch die Pollücken 20 axial nach außen geführt.

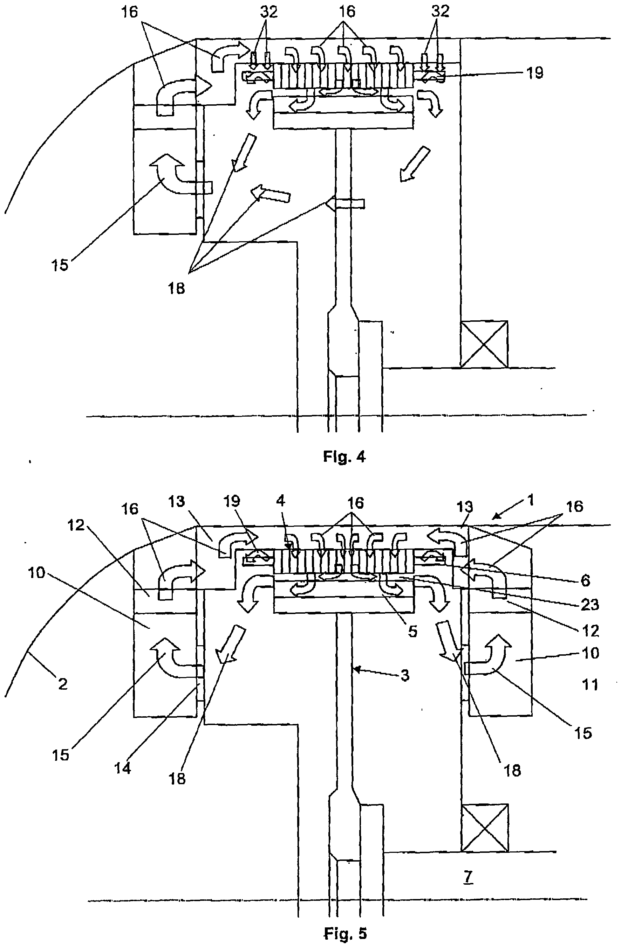

Im Kühlkreislauf sind natürlich auch einige Abwandlungen möglich, wie nachfolgend anhand der Figuren 3 bis 5 beschrieben wird: Z.B. könnte auch der Rotor 3 Schlitze aufweisen, die zusätzlich zur axialen Strömung eine radiale Durchströmung ermöglichen. Dadurch könnte einerseits zur Erhöhung der Kühlwirkung durch den Rotor 3 zusätzliche radial nach außen (wie in Fig. 3 gezeigt) gerichtete Kühlluftströmungen 31 erzeugt werden, die wiederum als axialer Kühlluftstrom 30 durch die Pollücken 20 des Rotors 3 und/oder durch den Luftspalt 23 axial nach außen geführt wird. Eine nach innen gerichtete radiale Strömung würde andererseits durch Reduktion der axialen Strömung eine Reduktion des Druckverlustes bewirken. Ebenso könnte kalte Kühlluft 16 direkt vom Zuführkanal 13 abgezweigt werden und diese kalte Kühlluft 32 direkt zu den Wickelköpfen 6 der Statorwicklung 24 geführt werden, wie in Fig. 4 gezeigt, wodurch eine verbesserte Kühlung der Wickelköpfe 6 ermöglicht werden würde. Z.B. könnten dazu im Zuführkanal 13 entsprechende Abzweigungen oder Durchbrüche vorgesehen sein, durch die kalte Kühlluft 16 zu den Wickelköpfen 6 geführt wird. Genauso ist es denkbar an jeder Seite des Generators 1 fremdgetriebene Ventilatoren 10 vorzusehen, wie bei beidseitiger Ventilation üblich und wie z.B. in Fig. 5 gezeigt. Dadurch entstehen zwei separate Kühlkreisläufe, die jeweils eine Hälfte des Generators 1 abdecken, wobei jeweils eine Kühleinrichtung 12, aber auch für beide Kühlkreise eine gemeinsame Kühleinrichtung 12 vorgesehen sein kann. Auch eine beliebige Kombination dieser Varianten ist denkbar.

Ebenso ist es natürlich möglich, über den Umfang verteilt mehrere Fremdventilatoren vorzusehen, z.B. drei bei kleineren Maschinen und bis zu zwölf oder mehr bei großen Maschinen.

## Patentansprüche

1. Verfahren zur Kühlung eines Stators (4) und eines Rotors (3) mit Schenkelpolwicklung (5) eines Rohrturbinengenerators (1) bei dem ein gasförmiges Kühlmedium im Rohrturbinengenerator (1) mittels zumindest eines fremdgetriebenen Ventilators (10) im Kreis umgewälzt wird, wobei das Kühlmedium durch den Ventilator (10) vom Rohrturbinengenerator (1) angesaugt und zwischen Stator (4) und Gehäuse (2) dem Stator (4) zugeführt wird, sodass das Kühlmedium durch das außen am Gehäuse (2) des Rohrturbinengenerators (1) vorbeiströmende kalte Triebwasser abgekühlt wird, **dadurch gekennzeichnet, dass** das Kühlmedium durch den Ventilator (10) zu einer Kühleinrichtung (12) gefördert wird, wo das warme Kühlmedium abgekühlt wird, und das abgekühlte Kühlmedium zwischen Stator (4) und Gehäuse (2) dem Stator (4) zugeführt wird und dort durch radiale Statorschlitze (28) des Statorblechpaketes (25) radial nach innen geführt und erwärmt wird und ein Teil des Kühlmediums unter weiterer Erwärmung durch einen Luftspalt (23) zwischen Stator (4) und Rotor (3) axial nach außen geführt wird und ein Teil des aus dem Stator (4) austretenden Kühlmediums in Pollücken (20) des Rotors (3) gerückt wird und durch die Pollücken (20) axial nach außen geführt wird.

2. Verfahren nach Anspruch 1, **dadurch gekennzeichnet, dass** das aus der Kühleinrichtung (12) austretende Kühlmedium über einen Zuführkanal (13) dem Stator (4) zugeführt wird.

3. Verfahren nach Anspruch 1 oder 2, **dadurch gekennzeichnet, dass** ein Teil des axial aus dem Luftspalt (23) und gegebenenfalls aus den Pollücken (20) austretenden Kühlmediums über einen Wickelkopf (6) des Stators (4) geführt wird.

4. Verfahren nach Anspruch 1 oder 2, **dadurch gekennzeichnet, dass** das axial aus dem Luftspalt (23) und gegebenenfalls aus den Pollücken (20) austretende Kühlmedium über einen Wickelkopf (6) des Stators (4) geführt wird.

5. Verfahren nach einem der Ansprüche 1 bis 4, **dadurch gekennzeichnet, dass** ein Teil des axial aus dem Luftspalt (23) und gegebenenfalls aus den Pollücken (20) austretenden Kühlmediums durch Öffnungen (11) in einem Nabenstern (8) des Rotors (3) von einer zur anderen Seite des Rotors (3) durchgeführt wird.

6. Verfahren nach einem der Ansprüche 1 bis 5, **dadurch gekennzeichnet, dass** ein Teil des aus den Statorschlitzen (28) austretenden Kühlmediums durch radiale Kanäle im Rotor (3) durchgeführt wird.

7. Verfahren nach einem der Ansprüche 1 bis 6, **dadurch gekennzeichnet, dass** ein Teil des aus der Kühleinrichtung (12) austretenden Kühlmediums direkt zu den Wickelköpfen (6) der Statorwicklung geführt wird.

8. Verfahren nach einem der Ansprüche 1 bis 7, **dadurch gekennzeichnet, dass** das aus dem Luftspalt (23) und gegebenenfalls aus den Pollücken (20) austretende warme Kühlmedium auf beiden Seiten der elektrischen Maschine (1) durch jeweils zumindest einen fremdgetriebenen Ventilator (10) angesaugt wird.

9. Rohrturbinengenerator (1) aufweisend
- einen Stator (4),
- einen Rotor (3) mit Schenkelpolwicklungen (5) und Pollücken (20),
- ein vom kalten Triebwasser umströmtes Gehäuse (2),
- zumindest einen fremdgetriebenen Ventilator (10) zur Umwälzung eines gasförmigen Kühlmediums im Kreis im Gehäuse (2),
wobei mit dem Ventilator (10) axial aus einem Luftspalt 23) zwischen Stator (4) und Rotor (3) austretendes warmes Kühlmedium ansaugbar ist und der Stator (4) vom Gehäuse (2) des Rohrturbinengenerators (1) radial beabstandet angeordnet ist, wobei der Rotor (3) und Stator (4) auf der Saugseite des Ventilators (10) angeordnet sind, **dadurch gekennzeichnet, dass** eine Kühleinrichtung (12) zum Abkühlen von warmem Kühlmedium vorgesehen ist, wobei das aus der Kühleinrichtung (12) austretende Kühlmedium zwischen Stator (4) und Gehäuse (2) durchströmbar ist und wobei die Kühleinrichtung (12) auf der Druckseite des Ventilators (10) angeordnet ist und wobei mit dem Ventilator (10) Kühlmedium, welches über radiale Statorschlitze (28) in die Pollücken (20) eingetreten ist, axial aus den Pollücken (20) ansaugbar ist.

10. Rohrturbinengenerator nach Anspruch 9, **dadurch gekennzeichnet, dass** zwischen der Kühleinrichtung (12) und dem Stator (4) ein Zuführkanal (13) vorgesehen ist.

11. Rohrturbinengenerator nach Anspruch 9 oder 10, **dadurch gekennzeichnet, dass** ein Mittel vorgesehen ist, mit dem aus der Kühleinrichtung (12) austretendes kaltes Kühlmedium direkt zu einem Wickelkopf (6) einer Statorwicklung führbar ist.

12. Rohrturbinengenerator nach Anspruch 9, 10 oder 11, **dadurch gekennzeichnet, dass** im Rotor (3) radiale von Kühlmedium durchströmbare Kanäle vorgesehen sind.

13. Rohrturbinengenerator nach einem der Ansprüche 9 bis 12, **dadurch gekennzeichnet, dass** eine Rotorwicklung (5) auf einem Nabenstem (8) des Rotors (3) angeordnet ist und am Nabenstem (8) eine axial durchströmbare Öffnung (11) vorgesehen ist.

14. Rohrturbinengenerator nach einem der Ansprüche 9 bis 13, **dadurch gekennzeichnet, dass** an jeder Seite der elektrischen Maschine (1) zumindest ein fremdgetriebener Ventilator (10) vorgesehen ist.

## Claims

1. Process for cooling a stator (4) and a rotor (3) with salient-pole winding (5) in a bulb turbine generator (1), where a gaseous cooling medium is circulated in the bulb turbine generator (1) in a circuit by means of at least one externally driven fan (10), with cooling medium being extracted from the bulb turbine generator (1) by the fan (10) and conveyed to the stator (4) between the stator (4) and the housing (2) so that the cooling medium is cooled by the cold feed water flowing over the outside of the housing (2) of the bulb turbine generator (1), **characterized by** the cooling medium being conveyed by the fan (10) to a cooling device (12), where the warm cooling medium is cooled, and the cooled cooling medium is led to the stator (4) between the stator (4) and the housing (2) and from there radially inward through radial stator gaps (28) in the stator core (25) and warmed up, and a part of the cooling medium is led outward axially through an air gap (23) between the stator (4) and the rotor (3) and is further warmed up in the process, and a part of the cooling medium exiting from the stator (4) is squeezed into pole gaps (20) in the rotor (3) and fed axially outward through the pole gaps (20).

2. Process according to Claim 1, **characterized by** the cooling medium exiting from the cooling device (12) being fed to the stator (4) via a feed channel (13).

3. Process according to Claim 1 or 2, **characterized by** a part of the cooling medium exiting axially from the air gap (23) and possibly from the pole gaps (20) being guided over an end winding (6) of the stator (4).

4. Process according to Claim 1 or 2, **characterized by** the cooling medium exiting axially from the air gap (23) and possibly from the pole gaps (20) being guided over an end winding (6) of the stator (4).

5. Process according to one of Claims 1 to 4, **characterized by** a part of the cooling medium exiting axially from the air gap (23) and possibly from the pole gaps (20) being passed through openings (11) in a hub spider (8) of the rotor (3) from one side of the rotor (3) to the other.

6. Process according to one of Claims 1 to 5, **characterized by** a part of the cooling medium exiting through the stator gaps (28) being led through radial channels in the rotor (3).

7. Process according to one of Claims 1 to 6, **characterized by** a part of the cooling medium exiting from the cooling device (12) being led directly to the end windings (6) of the stator winding.

8. Process according to one of Claims 1 to 7, **characterized by** the warm cooling medium exiting from the air gap (23) and possibly from the pole gaps (20) being extracted by at least one externally driven fan (10) on either side of the electric machine (1).

9. Bulb turbine generator (1) with
- a stator (4),
- a rotor (3) with salient-pole windings (5) and pole gaps (20),
- a housing (2) with cold feed water flowing over it,
- at least one externally driven fan (10) for circulating a gaseous cooling medium in a circuit in the housing (2),
where the fan (10) is suitable for extracting warm cooling medium exiting axially from an air gap (23) between the stator (4) and the rotor (3) and the stator (4) is arranged with radial clearance to the housing (2) of the bulb turbine generator (1), with the rotor (3) and the stator (4) being arranged on the suction side of the fan (10), **characterized by** a cooling device (12) being provided to cool warm cooling medium, where the cooling medium exiting from the cooling device (12) is suitable for flowing between the stator (4) and the housing (2), where the cooling device (12) is mounted on the pressure side of the fan (12), and where cooling medium that has entered the pole gaps (20) through radial stator gaps (28) is suitable for being extracted axially from the pole gaps (20) with the fan (10).

10. Bulb turbine generator according to Claim 9, **characterized by** a feed channel (13) being provided between the cooling device (12) and the stator (4).

11. Bulb turbine generator according to Claim 9 or 10, **characterized by** a means being provided with which to guide cold cooling medium exiting from the cooling device (12) directly to an end winding (6) of a stator winding.

12. Bulb turbine generator according to Claim 9, 10 or 11, **characterized by** radial channels suitable for the cooling medium flowing through being provided in the rotor (3).

13. Bulb turbine generator according to one of Claims 9 to 12, **characterized by** a rotor winding (5) being arranged on a hub spider (8) of the rotor (3) and by an opening (11) suitable for conducting axial flow being provided on the hub spider (8).

14. Bulb turbine generator according to one of Claims 9 to 13, **characterized by** at least one externally driven fan (10) being provided on each side of the electric machine (1).

## Revendications

1. Procédé de refroidissement d'un stator (4) et d'un rotor (3) avec bobinage du pôle saillant (5) d'un générateur de turbine bulbe (1), dans lequel un milieu de refroidissement gazeux est circulé dans le générateur de turbine bulbe (1) moyennant au moins un ventilateur à actionnement externe (10), le milieu de refroidissement étant aspiré par le ventilateur (10) à partir du générateur de turbine bulbe (1) et amené au stator (4) entre le stator (4) et le carter (2) de manière que le milieu de refroidissement se trouve refroidi par l'eau motrice froide coulant en dehors du carter (2) du générateur de turbine bulbe (1), **caractérisé en ce que** le milieu de refroidissement est refoulé moyennant le ventilateur (10) vers un dispositif de refroidissement (12) dans lequel le milieu de refroidissement chaud est refroidi et le milieu de refroidissement refroidi est amené au stator (4) entre le stator (4) et le carter (2) et d'ici mené radialement vers l'intérieur à travers des fentes stator radiales (28) du noyau du stator (25) et est chauffé, et une partie du milieu de refroidissement est menée axialement vers l'extérieur à travers d'un entrefer (23) entre le stator (4) et le rotor (3) et une partie du milieu de refroidissement sortant du stator (4) est pressée dans des espaces interpolaires (20) du rotor (3) et menée axialement vers l'extérieur à travers des espaces interpôlaires (20).

2. Procédé selon la revendication 1, **caractérisé en ce que** le milieu de refroidissement sortant du dispositif de refroidissement (12) est amené au stator (4) vers un canal d'amené (13).

3. Procédé selon la revendication 1 ou 2, **caractérisé en ce qu'**une partie du milieu de refroidissement sortant axialement de l'entrefer (23) et, le cas échéant, des espaces interpolaires (20), est menée au-dessus d'une connexion frontale (6) du stator (4).

4. Procédé selon la revendication 1 ou 2, **caractérisé en ce que** le milieu de refroidissement sortant axialement du dispositif de refroidissement (12) et, le cas échéant, des espaces interpolaires (20), est mené au-dessus d'une connexion frontale (6) du stator (4).

5. Procédé selon l'une des revendications 1 à 4, **caractérisé en ce qu'**une partie du milieu de refroidissement sortant axialement de l'entrefer (23) et, le cas échéant, des espaces interpolaires (20) passe par des ouvertures (11) dans un noyau (8) du rotor (3) d'un côté du rotor (3) à l'autre.

6. Procédé selon l'une des revendications 1 à 5, **caractérisé en ce qu'**une partie du milieu de refroidissement sortant des fentes stator (28) passe par des canaux radiaux du rotor (3).

7. Procédé selon l'une des revendications 1 à 6, **caractérisé en ce qu'**une partie du milieu de refroidissement sortant du dispositif de refroidissement (12) est amené directement aux connexions frontales (6) de l'enroulement stator.

8. Procédé selon l'une des revendications 1 à 7, **caractérisé en ce que** le milieu de refroidissement chaud sortant de l'entrefer (23) et, le cas échéant, des espaces interpolaires (20), est aspiré sur les deux côtés de la machine électrique (1) par au moins un ventilateur à actionnement externe (10).

9. Générateur de turbine bulbe (1) comportant
- un stator (4),
- un rotor (3) avec bobinage du pôle saillant (5) et espaces interpolaires (20),
- un carter autour duquel coulent les eaux motrices (2),
- au moins un ventilateur à actionnement externe (10) pour circuler un milieu de refroidissement gazeux dans le carter (2),
où du milieu chaud sortant axialement d'un entrefer (23) entre le stator (4) et le rotor (3) peut être aspiré moyennant le ventilateur (10) et le stator (4) est disposé à une distance radiale du carter (2) du générateur de turbine bulbe (1), le rotor (3) et le stator (4) étant placés au côté d'aspiration du ventilateur (10), **caractérisé en ce qu'**un dispositif de refroidissement (12) est prévu pour refroidir un milieu de refroidissement chaud, le milieu de refroidissement sortant du dispositif de refroidissement (12) pouvant passer entre le stator (4) et le carter (2) et le dispositif de refroidissement (12) étant disposé au côté pression du ventilateur (10) et du milieu de refroidissement, qui aurait pénétré dans les espaces interpolaires (20) par des fentes stator radiales (28) pouvant être aspiré à partir des espaces interpolaires.

10. Générateur de turbine bulbe selon la revendication 9, **caractérisé en ce qu'**un canal d'amené (13) est prévu entre le dispositif de refroidissement (12) et le stator (4).

11. Générateur de turbine bulbe selon la revendication 9 ou 10, **caractérisé en ce qu'** un moyen est prévu qui permet de mener un milieu de refroidissement froid sortant du dispositif de refroidissement (12) directement à une connexion frontale (6) de l'enroulement stator.

12. Générateur de turbine bulbe selon la revendication 9, 10 ou 11, **caractérisé en ce que** des canaux radiaux sont prévus dans le rotor (3) dans lesquels peut couler le milieu de refroidissement.

13. Générateur de turbine bulbe selon l'une des revendications 9 à 12, **caractérisé en ce qu'**un enroulement stator (5) est disposé sur un noyau (8) de rotor (3) et que des ouvertures (11) axialement passibles sont disposées sur le noyau (8).

14. Générateur de turbine bulbe selon l'une des revendications 9 à 13, **caractérisé en ce que** sur chaque côté de la machine électrique (1) au moins un ventilateur à actionnement externe (10) est prévu.
